# EUROPEAN PATENT APPLICATION

(11) **EP 4 184 216 A1**
(43) Date of publication of application: **24.05.2023**
(21) Application number: 22198743.1
(22) Date of filing: 29.09.2022
(51) Int. Cl.: G01S 19/07

(54) **DEVICES, METHODS AND SYSTEMS FOR DISTRIBUTING GEOGRAPHICALLY RELATED CONTENT FOR A SATELLITE-BASED NAVIGATION SYSTEM**

(30) Priority: 22.11.2021 US 202117532368
(71) Applicant: u-blox AG, 8800 Thalwil (CH)
(72) Inventor: Rao, Rajani, 8800 Thalwil (CH); Ebeling, André, 8800 Thalwil (CH); Ferguson, Kendall, 8800 Thalwil (CH); Leandro, Rodrigo, 8800 Thalwil (CH); de Lorenzo, Renato Francesco, 8800 Thalwil (CH); Lenzarini, Davide, 8800 Thalwil (CH)
(74) Representative: Epping - Hermann - Fischer

(57) **Abstract**

According to the disclosure, a receiver-side device for use in a satellite-based navigation system comprising a satellite receiver circuit for receiving signals from at least one satellite of the satellite-based navigation system, a communication interface for requesting and receiving data from a communication network, and at least one processing module. The at least one processing module is configured to: determine an approximate position of the receiver-side device; select at least one data set from a plurality of available data sets based on the determined approximate position, each data set corresponding to a predefined subarea of a service area served by the satellite-based navigation system and comprising geographically related content relevant to the respective subarea, wherein the content comprises localized correction data of the satellite-based navigation system; request the selected at least one data set and receive corresponding content relevant to the approximate position from the communication network; and process signals from the satellite-based navigation system received by the satellite receiver circuit, comprising calculating a corrected position and/or a corrected time using the received localized correction data relevant to the approximate position.

## Description

### Field of the invention

The present disclosure generally relates to a receiver-side device, a content server, a content distribution system and a signal processing method for use in a satellite-based navigation system. The present disclosure further relates to a computer program product and a non-volatile storage medium comprising instructions for performing a signal processing method. In particular, the disclosure relates to devices, methods and systems for improved processing and distribution of localized correction data.

### Background of the invention

A number of global and regional satellite-based navigation systems are currently in use. Known examples of Global Navigation Satellite Systems (GNSS) include the US-based Global Positioning System (GPS), Russia's Global Navigation Satellite System (GLONASS), China's BeiDou Navigation Satellite System (BDS) and the Galileo system of the European Union. In addition, a number of further systems, global, regional and national, are operating or under development.

In general, satellite-based navigation systems enable to determine a position of a satellite receiver based on propagation time delays of satellite signals received from a plurality of satellites located at known locations in an orbit. The precision of the determined position of the satellite receiver generally depends on various parameters of the received signals used for positioning. Among others, the signals encode information on a position of the respective satellite and a point in time at which the signal was transmitted by the respective satellite. The encoded information themselves as well as the radio frequency (RF) signals used for their transmission are subject to errors. For example, the satellites of such systems, while driven by accurate atomic clocks, exhibit independent variability, beyond those determined from the information transmitted by the satellite. Such errors, known as satellite clock errors, cannot be ignored in precise positioning applications. Other error sources include an uncertainty regarding the exact orbital position of the satellites at the time of sending, and disturbances in signal propagation caused by the atmosphere.

To further improve the precision of a satellite-based navigation system, for example for Precise Point Positioning (PPP) and/or Real-Time Kinematic positioning (RTK), it is known to provide a number of stationary reference receivers at known position on the ground. Based on continuous tracking of a phase of a received satellite signal and other signal processing methods, it is possible to determine real-time correction data for the satellite-based navigation system. The correction data may comprise clock correction data, ephemeris correction data, and atmospheric correction data. Such correction data may be used by non-stationary satellite receivers at unknown locations to improve their position accuracy, their position detection speed and/or, knowing their location, to improve time accuracy for time-transfer applications. For this purpose, the National Geodetic Survey of the US National Oceanic and Atmospheric Administration (NOAA) operates the so-called NOAA Continuously Operating Reference Station (CORS) network.

However, due to distributed generation and sheer amount of data produced by a largescale network of reference stations such as the CORS network, its distribution and storage, in particular for use by relatively small, mobile devices, is an issue that needs to be urgently addressed.

### Summary of the invention

According to a first aspect of the present disclosure, a receiver-side device for use in a satellite-based navigation system is provided. The receiver-side device comprises a satellite receiver circuit for receiving signals from at least one satellite of the satellite-based navigation system, a communication interface for requesting and receiving data from a communication network, and at least one processing module. The processing module is configured to perform the following steps: determine an approximate position of the receiver-side device; select at least one data set from a plurality of available data sets based on the determined approximate position, each data set corresponding to a predefined subarea of a service area served by the satellite-based navigation system and comprising geographically related content relevant to the respective subarea, wherein the content comprises localized correction data of the satellite-based navigation system; request the selected at least one data set and receive corresponding content relevant to the approximate position from the communication network; and process signals from the satellite-based navigation system received by the satellite receiver circuit, comprising calculating a corrected position and/or a corrected time using the received localized correction data relevant to the approximate position.

Among others, the inventors have found that the separation of geographically related content comprising correction data into a plurality of different data sets, for example tens, hundreds, thousands or even ten thousands of different data sets, each data set corresponding to a predefined subarea of a service area, for example, a single country, province or districts, or a given area, such as a 100x100 km square, can help to limit the size of the data to be obtained by a receiver-side device. Moreover, by requesting a selected at least one data set over a communication network on demand, the receiver-side device can determine which information to obtain for a present position and/or select appropriate area data sets as that device moves to different coverage areas. At the same time, it is not necessary to share the approximate position of the receiver-side device with any other component of the satellite-based navigation system, including a source of the at least one data set. This minimizes the need to disclose device data in order to obtain geographically related content, which in turn increase privacy protection for the device information, such as its approximate position. It also reduces the data transferred in an uplink direction and a downlink direction. The obtained localized correction data can be used to calculate a corrected position and/or a corrected time based on signals received from the satellite-based navigation.

According to at least one embodiment, the at least one processing module is specifically configured to determine the approximate position of the receiver-side device based on signals received by the satellite receiver circuit. This enables the autonomous determination of the approximate position, i.e. without relying on either a GNSS correction data service provider or another external entity, such as a communication network.

According to at least one embodiment, the at least one processing module is specifically configured to determine that the approximate position is contained in a first subarea of the plurality of subareas and to select a first data set corresponding to the first subarea of the service area based on a mapping relationship between the plurality of available data sets and the plurality of subareas.

The present disclosure considers different ways of establishing the mapping relationships between available data sets and corresponding subareas. Amongst others, a corresponding directory defining the mapping relationship between each one of the plurality of available data sets and the corresponding subareas may be received from the communication network. Alternatively or in addition, the processing module may be specifically configured to infer the mapping relationship between the first data set and the corresponding subarea based on metadata associated with a first data set. Metadata associated with a dataset comprises metadata of the data sets and their availability. This may include metadata stored in the received datasets themselves (e.g. headers or categories) or metadata used during querying (e.g. a name of the dataset or a topic of a content delivery system or network). Alternatively or in addition, the processing module may be specifically configured to compute the mapping relationship between each one of the plurality of available data sets and the corresponding subareas based on a map projection system for the service area, defining an ordered set of subareas of the service area. For example, MGRS grid reference identifiers may be used to identify the plurality of data sets and define corresponding subareas. This enables a very flexible approach to both definition and determination of appropriate subareas and corresponding data sets. It is noted that the mapping relationship is not necessarily unequivocal, in that more than one data set may be applicable to a single subarea and/or a single data set may cover more than a single subarea.

According to at least one embodiment, a subset of more than one data set from the plurality of available data sets corresponds to the approximate position, and the at least one processing module is specifically configured to select at least one data set from the subset of more than one data set. Accordingly, it is the data consumer, e.g., the receiver-side device, that determines which information to obtain, rather than the data producer, e.g., a content server.

This choice may be based on at least one of the following parameters: a service level agreement; a desired precision of the localization; a current operating state of the receiver-side device; a memory size of the receiver-side device; a size of the more than one corresponding data set; a current data transmission rate of the communication interface; a tariff for usage of the communication interface; a pricing structure for the geographically related content; and an update frequency of the more than one corresponding data sets. In this way, the transmitted content can be tailored to the specific needs of a receiver-side device, while maintaining the re-usability of the generated data sets by other receiver-side device.

According to at least one embodiment, the at least one processing module is specifically configured to send a subscription request identifying a data stream and/or a topic to a content server or a node of a content distribution network, and, in response to the subscription request, receive current versions of the at least one selected data set via the subscribed data stream and/or from the content server or the node of a content distribution network, respectively. The subscription request and published current versions of the at least one selected data set may be sent using appropriate protocols, such as the Message Queuing Telemetry Transport, MQTT, protocol. Use of a subscribe-publish mechanism facilitates repeated and/or regular provision of current, i.e. newly computed or updated data sets, comprising valid correction data.

For example, the provided correction data may be valid for a predetermined time only, for example a given time tag epoch of the GNSS or a processing interval of the receiver-side device. Once new correction data becomes available, for example in a new epoch with a new time tag or for the next processing interval, a subscribed receiver-side device may automatically, i.e. without sending a new request, receive a current set of localized correction data from the content provider. The current set of localized correction data may comprise all available correction data, e.g. satellite clock, bias and orbit correction data as well as tropospheric and ionospheric correction data, or only a subset of previously provided correction data, e.g. satellite clock correction data, which may be changing at a faster rate than other parts of the correction data, such as tropospheric and ionospheric correction data.

According to a second aspect of the disclosure, a content server for a satellite-based navigation system is provided. The content server comprises a database for collecting correction data for a service area served by the satellite-based navigation system for use by a plurality of receiver-side devices of the satellite-based navigation system. The content server further comprises a processing subsystem for transforming the correction data into a plurality of separate data sets, each data set corresponding to a predefined subarea of the service area and comprising geographically related content relevant to the respective subarea, wherein the content relevant to the respective subarea comprises localized correction data of the satellite-based navigation system. The content server further comprises a publication subsystem for distributing the plurality of separate data sets over a communication network such that different receiver-side devices of the satellite-based navigation system can select and request at least one data set from the plurality of separate data sets and receive the corresponding localized correction data for correcting signals received from the satellite-based navigation system within a corresponding subarea.

The content server according to the second aspect can help to collect, reorganize and distribute the reorganized, localized correction data for a large number of receiver-side devices. It essentially reorganizes the geographically related content to a manifold of locally tailored data sets or data sources that the receiver-side device can select from. It then, directly or indirectly, provides the plurality of locally applicable data sets or data sources to receiver-side devices in a given subarea, without needing to be aware of the current positions of the receiver-side devices. In other words, the content server is not required to create a stream of data per receiver-side device. It is enough to create multiple fine granular streams of data that can be selected by the receiver-side devices to provide a multicast-like instead of unicast-like approach. This reduces both the required processing performance on the side of the content server, as well as the required transmission bandwidth between the content server and the receiver-side devices as only the selected data is transferred.

The geographically related content may comprise different types of data and may be organized in different ways. For example, the geographically related content may be organized by subareas or by a type of data or a combination of both. Different types of data or subareas may be further subdivided in a hierarchical fashion, for example using a hierarchy of topics of a content delivery network, e.g. topics covering all satellite related correction data or only correction data for a certain error type such as clock drift errors, or topics covering an entire country or 100x100 km square or only a province or 10x10 km square, allowing to further tailor the available data sets and reduce a corresponding transmission bandwidth.

According to an embodiment, the processing subsystem is specifically configured for transforming the geographically related content into two or more different series of separate data sets based on different subdivisions of the service area. The different subdivisions may comprise at least two of a subdivision by continents, a subdivision by countries, a subdivision by provinces and a subdivision by regions. A series of data sets may relate to a plurality of similar data sets of different areas, e.g. equi-sized data sets or data sets on a same level of a location hierarchy. The series itself may be characterized by a required resolution, country coverage, etc. The provision of different levels of subdivisions of the service area offers more flexibility as it essentially gives the receiver-side device the choice of how much correction data it wants to receive. For example, a first receiver-side device may request correction data with high precision for a relatively small subarea such as a single province, whereas a second receiver-side device may request correction data for a larger subarea such as an entire country, potentially having a lower resolution.

According to at least one embodiment, the publication subsystem is specifically configured for selective distributing data sets from one of the two or more different series of separate data sets based on at least one of an individual request or a subscription request of a receiver-side device. This enables the receiver-side device to perform single request/response provisions or to subscribe to the regular provision of localized correction data based on service level agreements and similar information managed by the content server.

Alternatively or in addition, the database may be specifically configured to collect different types of correction data, comprising at least one of satellite-related correction data, ionosphere-related correction data, troposphere-related correction data, quality data and integrity data. The processing subsystem may be specifically configured to transform the different types of correction data into a plurality of companion data sets, each companion data set comprising localized correction data of at least one type of correction data applicable to the predefined subarea of the service area. Companion data set may relate to different data sets with different localized error correction data related to a common position. Thus, companion data sets are spatially overlapping at least at the common position. However, they do not need to cover an identical subarea, e.g. they may only be partially overlapping. The publication subsystem may be specifically configured to distribute at least two of the companion data sets as separate data sets over the communication network. In this case, a receiver-side device may request only one or more specific types of correction data useful for its processing capabilities and current operating state, avoiding the transmission of irrelevant data to receiver-side devices with limited capabilities.

According to at least one embodiment, each one of the plurality of data sets is associated with corresponding metadata, the metadata indicating a mapping relationship between the respective data set and a corresponding subarea. Such metadata, for example MGRS based grid references indicating a position and precision or extend of a subarea, can be used by receiver-side devices to find and select an appropriate data set and/or to construct an internal catalogue of available data sets. By providing suitable metadata for the generated data sets, the receiver-side devices can discover and select appropriate data sets without further assistance from the content server or provision of an explicit directory, further improving privacy and bandwidth efficiency.

According to at least one embodiment, the publication subsystem further publishes a directory or similar data structure, like a catalog, defining a mapping relationship between each one of the plurality of data sets and the corresponding subareas, thereby enabling the receiver-side device to determine a data stream or topic of interest. Provision of an explicit directory makes it easier for the receiver-side devices to determine a locally applicable data set from the plurality of separate data sets without disclosing their current position to the content server.

According to at least one embodiment, the publication subsystem provides a separate data stream and/or topic for each one of the plurality of subareas, such that receiver-side devices of the satellite-based navigation system can subscribe to a locally applicable data set from the plurality of separate data sets without disclosing their current position to the content server. Subscription to individual data streams or topics of a publication subsystem enables a relatively large number of receiver-side devices to obtain information that is relevant to them without disclosing their position to the content server, and without the need for the content server to generate a different stream of data per receiver-side device.

According to a third aspect of the disclosure, a content distribution system comprises at least one receiver-side device according to the first aspect and a content server according to the second aspect. The details and advantages of the respective devices are not repeated here.

In at least one embodiment, the content distribution system according to the third aspect further comprises one or more nodes of a content distribution network, wherein the content server is configured to provide the plurality of data sets to the one or more nodes, and the at least one receiver-side device is configured to request and receive the at least one data set from at least one of the nodes. Use of a content distribution network enables a fast, low latency and efficient distribution of large volumes of data to a large number of receiver-side devices by allowing regional or local caching and/or multicasting of the geographically related content.

In at least one embodiment, the plurality of separate data sets exceeds at least one of 10 separate data sets, 100 separate data sets, or 1000 separate data sets.

Alternatively or in addition, the content distribution system comprises a plurality of receiver-side devices, wherein the number of receiver-side devices exceeds the number of separate data sets by at least one of a factor of 10, a factor of 100, or a factor of 1000

The disclosed content distribution system may distribute tens to thousands of separate data sets to hundreds to millions of receiver-side devices. Providing a relatively high number of data sets enables to further localize their content and, at the same time, reduce their size, making it easier to transmit them to a relatively large number of receiver-side devices. If the number of receiver-side devices is considerably larger than the number of data sets, multicasting or broadcasting them locally helps to further reduce the transmission bandwidth.

According to a fourth aspect, a signal processing method performed by a receiver-side device of a satellite-based navigation system is provided. The method comprises the following steps: determining an approximate position; selecting at least one data set from a plurality of available data sets based on the determined approximate position, each data set corresponding to a predefined subarea of a service area served by the satellite-based navigation system and comprising geographically related content relevant to the respective subarea, wherein the content comprises localized correction data of the satellite-based navigation system; requesting the selected at least one data set and receiving corresponding content relevant to the approximate position from the communication network; and processing signals from the satellite-based navigation system received by a satellite receiver circuit, comprising calculating a corrected position and/or a corrected time using the received localized correction data relevant to the approximate position.

The method according to the fourth aspect essentially implements the functionality of the receiver-side device according to the first aspect and achieves similar advantages.

According to at least one embodiment, the method further comprises the following steps performed by a content server: collecting correction data for the service area served by the satellite-based navigation system for use by a plurality of receiver-side devices of the satellite-based navigation system; transforming the correction data into the plurality of separate data sets; and distributing the plurality of separate data sets over the communication network. The additional method steps according to this embodiment of the fourth aspect essentially implement the functionality of the content server according to the second aspect and achieves similar advantages.

The steps of the method according to the fourth aspect may be implemented using instructions of a computer program product, which may be performed by one or more processors of a receiver-side device or a content server, respectively. Such instructions may be stored on a non-volatile data storage medium. Such a computer program product can be executed by many different devices, and enables the above advantages.

### Brief description of the drawings

The improved devices, methods and systems will be described in more detail with reference to individual embodiments shown in the attached drawings.
Figure 1 shows a schematic setup of a receiver-side device.
Figures 2 to 4 show different ways of establishing a mapping relationship between subareas and corresponding data sets.
Figure 5 shows a schematic setup of a content server.
Figures 6 to 8 show different ways of organizing geographically related content into different data sets.
Figure 9 shows a schematic setup of a system comprising a receiver-side device, a content server, GNSS satellites and a CORS network.
Figure 10 shows a reorganization of data performed by a content server.
Figure 11 shows a content distribution system for performing single request/response provisions of data sets or subscriptions to data sets.
Figure 12 shows a content distribution system for indirect delivery of data sets using a content distribution network.
Figures 13A and 13B show an improvement in processing efficiency achieved by the disclosed content distribution system.
Figures 14 shows the current unsustainable growth of the bandwidth required with the number of receiver-side devices, when unicast is used to deliver continental level data.
Figure 15 shows an improvement in flexibility achieved by the disclosed content distribution system.

In the following description, the same reference numerals are used to describe individual components of different embodiments. Use of common reference symbols will support better understanding but is not intended to limit the scope of the disclosure. In particular, while aspects described with respect to a specific embodiment may also be implemented in another embodiment of the disclosure, instances of the described components do not need to be identical in all respects in different embodiments. In general, the following, detailed description of individual embodiments is not intended to be limiting. Instead, all variations and combinations of features as detailed below are intended to fall under the scope of the present disclosure as defined by the attached set of claims.

### Detailed description of embodiments

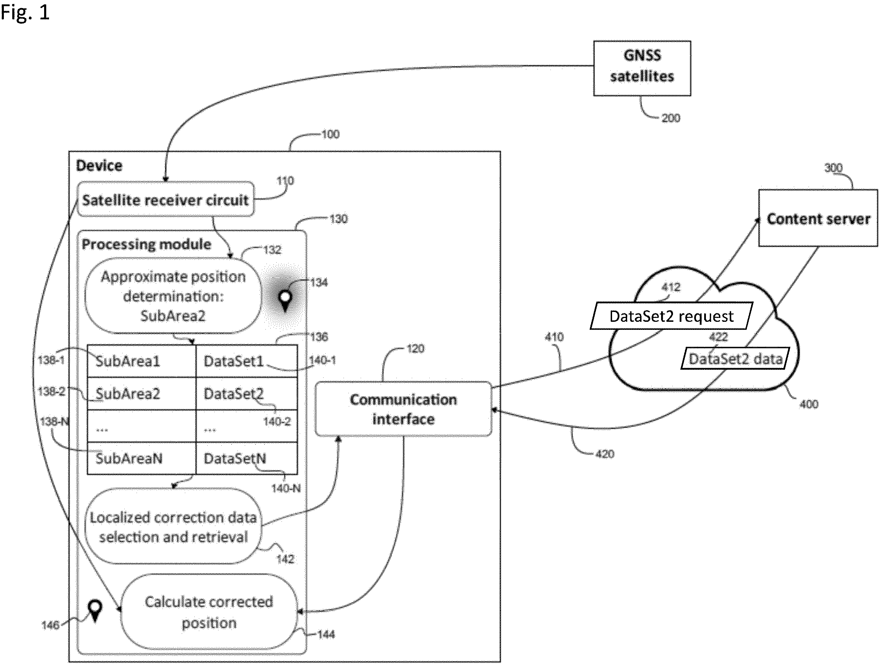

Figure 1 shows, in schematic form, a receiver-side device 100 according to an embodiment of the present disclosure. The receiver-side device 100 may be a standalone satellite receiver, such as a handheld positioning device, or may be integrated into another device, such as a portable communication or computing device, a vehicle control system, or the like. The receiver-side device 100 comprises a satellite receiver circuit 110, a communication interface 120 and a processing module 130. The satellite receiver circuit 110, the communication interface 120 and the processing module 130 may be implemented as separate circuit components. However, they may also be implemented using common circuitry, e.g. a general purpose computing architecture for executing a computer program, and share at least some components during execution. This is not limited by the present disclosure.

The satellite receiver circuit 110 is connected to at least one antenna (not shown in Figure 1) for receiving radio frequency (RF) signals from multiple GNSS satellites 200. A typical GNSS uses constellations of several satellites to cover the surface of the entire planet. However, at any location on the surface of the earth, only a subset of GNSS satellites 200 is visible for a given receiver-side device 100. Typically, a subset of four to eight satellites is used for positioning by a receiver-side device 100.

The communication interface 120 serves to request and receive correction data from a content server 300. Communication between the communication interface 120 of the device 100 and the content server 300 is performed through the use of a bidirectional communication network 400. In the sense of the present application, any means for submitting a request from the communication interface 120 to the content server 300 and receiving a data set from the content server 300 at the communication interface 120 is considered to represent a communication network. The communication network 400 may therefore be perceived as a combination of an uplink channel 410 used for sending an individual request or a subscription request 412 and a downlink channel 420 used for receiving a at least one message 422 providing data of at least one data set. Attention is drawn to the fact that the uplink channel 410 and the downlink channel 420 are not required to use the same physical resources or communication technology. Accordingly, the communication network 400 may be a wide area network, such as the Internet, a circuit or packet switched communication network, such as a 3G, 4G, 5G or a later cellular phone network as defined by the 3GPP, or a non-terrestrial network, such as the one provided by High Altitude Platform Systems (HAPS) or LEO satellites, or a combination of a low bandwidth uplink channel in combination with a higher bandwidth downlink channel, e.g. a terrestrial or satellite high bandwidth downlink channel.

The processing module 130 is set up to implement a sequence of processing steps on the received data. This may be achieved by specific hardware components or a general processing architecture configured to execute computer readable instructions of a computer program.

In particular, in a first step 132 an approximate position 134 of the receiver-side device 100 is determined. An approximate position may be determined by the receiver-side device 100 in absence of any valid correction data, i.e. independent from any assistance by the content server 300. Such an approximate position 134 may have a precision of a few hundred or a few ten meters. The approximate position 134 may be determined by different means, as detailed below.

For example, the satellite receiver circuit 110 may acquire a number of RF signals carrying uncorrected time and satellite position data from the GNSS satellites 200 and determine an approximate position in absence of any valid correction data. For example, the receiver-side device may calculate the approximate position 134 after having received at least four GNSS messages from four different navigation satellites. An autonomously determined code phase based position may have a precision of less than 10 meters.

Alternatively, the communication interface 120 may provide an approximate position based on data provided via the communication network 400. For example, if the communication network 400 is a mobile phone network, an approximate position 134 may be determined based on known positioning methods provided by the communication network 400, for example, by corresponding services of LTE or 5G networks.

Alternatively, the processing module 130 may also determine the approximate position 134 based on other information, such as a last known position of the receiver-side device 100 or information provided by a user of the receiver-side device 100. For example, for time-transfer applications, the position of the receiver-side device 100 may be known a *priori.*

As shown in Figure 1, the processing module 130 may maintain a mapping relationship 136 to establish which one of a plurality of data sets 140 is applicable to a given subarea 138 surrounding the approximate position 134. According to the example indicated in Figure 1, the entire service area of the GNSS is divided into a total of N subareas 138-1 to 138-N. The mapping relationship 136 maps each of the subareas 138-1 to 138-N to a corresponding data set 140-1 to 140-N. The mapping relationship 136 may be hardcoded with a fixed precision level. Alternatively, the mapping relationship 136 can be computed to have a flexible precision level based on input parameters as detailed below.

In the described example, the approximate position 134 falls into the second subarea 138-2. Accordingly, to improve positioning within the second subarea 138-2, in a step 142, the receiver-side device 100 requests the second data set 140-2, which comprises geographically related content specific for the second subarea 138-2. For this purpose, the communication interface 120 issues a request 412 identifying the data set 140-2 over the uplink channel 410, which is received by the content server 300. In response, the content server 300 provides at least one message 422 for providing the actual data of the second data set 140-2 via the downlink channel 420, which is received by the communication interface 120 of the receiver-side device 100. Depending on the specific implementation, an individual request 412 can be sent each time a data set 140 is to be transferred by the content server 300 using a request-response or pull mechanism. Alternatively, a single subscription request 412 may be sent to activate a subscribe-publish or push mechanism. In the latter case, multiple messages 422 are received from the content server 300, for example until the receiver-side device 100 unsubscribes from the second data set 140-2 or the downlink channel 420 becomes unavailable.

In the described example, the second data set 140-2 comprises localized correction data of the GNSS for the second subarea 138-2. For example, the provided localized correction data may comprise timing corrections of GNSS satellites 200 visible from within the subarea 138-2, in which the receiver-side device 100 is located. Furthermore, the correction data may comprise ionospheric and tropospheric correction data for respective parts of the atmosphere relevant for the subarea 138-2, e.g. parts of the atmosphere in the direct line of sight between the subarea 138-2 and the visible GNSS satellites 200.

In a further step 144, the processing module 130 calculates a corrected position 146 of the receiver-side device 100. Calculation of the corrected position 146 includes the determination of satellite signals by the satellite receiver circuit 110 and further processing based on the localized correction data received as part of the second data set 140-2. As a result, a corrected position 146 of the receiver-side device 100 is determined by the processing module 130 for further use. In other words, the corrected position 146 differs from the approximate position 134 in that it is based on further information, i.e. at least some of the received localized correction data, and therefore will typically have a higher precision.

Alternative or in addition, for example in a time-transfer application, a corrected time may be computed based on original time information contained in the received GNSS satellite messages and the localized correction data.

Attention is drawn to the fact that, while the description frequently refers to satellite-based navigation systems in accordance with common use of said term, the primary function of the receiver-side device 100 is to obtain an improved position 146 and/or time of the receiver-side device 100. Whether or not the obtained position 146 and/or time is used for navigation purposes or different purposes is not limited by the present disclosure.

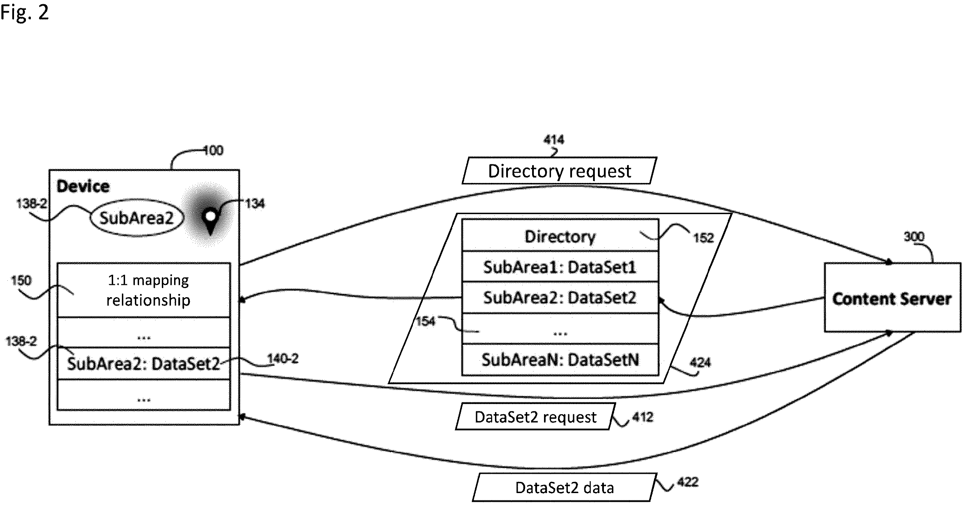

Figure 2 shows a first possible implementation for establishing the mapping relationship 136 between the respective subareas 138 and corresponding data sets 140. In this embodiment, the content server 300 provides an explicit directory 152 which encodes a one-to-one relationship 150 between subareas 138 and identifiers of available data sets 140. For example, a table may be used to define the mapping relationship between a subarea 138 and a corresponding data set 140. The one-to-one mapping relationship 150 is used by the receiver-side device 100 may correspond directly to the mapping relationship 136. Moreover, the receiver-side device 100 may further extend the mapping relationship 136 by other means, e.g. by receiving further directories 152 from different content servers 300 or by one of the methods described below. Similarly, only a subset of entries 154 of the one-to-one mapping relationship 150 may be included in the mapping relationship 136, e.g. only those subareas 138 of a given continent or the like.

In the embodiment of Figure 2, four messages are exchanged between the receiver-side device 100 and the content server 300 via the communication interface 120. A directory request 414 is sent from the receiver-side device 100 to the content server 300 and is used to request the directory 152. The content server responds with a directory response 424 containing the directory 152 on the downlink channel 420. The directory 152 comprises directory entries 154 for each subarea 138 and corresponding data set 140 provided by the content server 300. The directory 152 is then processed by the receiver-side device 100 to establish which data set 140 to request based on its approximate position 134. Thereafter, a data set request 412 is issued to obtain the appropriate data set 140 in one or more messages422 received from the content server 300 as described before.

Attention is drawn to the fact that the directory 152 does not need to be transferred for each request 412 for a specific data set 140. In particular, the directory 152 may only be received once from the content server 300 and may be stored in the receiver-side device 100 thereafter, e.g. within the mapping relationship 136. Alternatively, the receiver-side device 100 may subscribe to a special topic or data stream for receiving updates on the directory 152 every time a directory entry 154 is changed, removed from or added to the directory 152.

The implementation described with respect to the embodiment of Figure 2 limits the amount of processing to be performed by the receiver-side device 100. In particular, as described above, the receiver-side device 100 may simply store the received one-to-one mapping relationship 150 as mapping relationship 136 for looking up an appropriate data set 140.

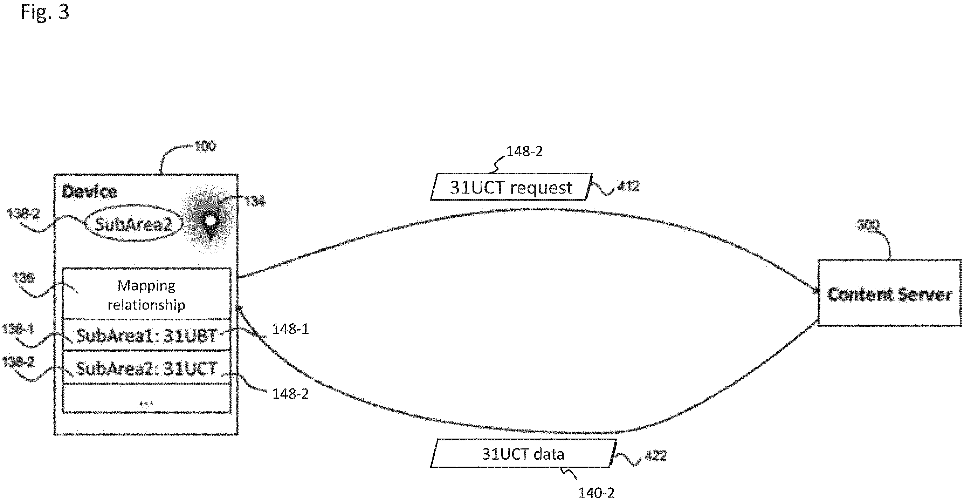

Figure 3 shows an alternative embodiment for establishing the mapping relationship 136 by the receiver-side device 100. In this embodiment, a mapping relationship between an approximate position 134 and corresponding data sets 140 is determined by the receiver-side device 100 without the help of additional metadata, such as an explicit directory 152, provided from the content server 300. For example, based on a known map projection system, the receiver-side device 100 can translate the coordinates of the approximate position 134 into a corresponding identifier 148 for a subarea 138. For example, the surface of the earth can be covered with a fixed sequence of subareas. Such a sequence can start, for example, from the North Pole and then cover the entire globe following a spiral turning, for example, south-eastwards, and continuing until the sequence eventually reaches the opposite pole, i.e. the South Pole. In this example, it is sufficient to identify the subarea 138 into which the approximate position 134 falls to determine an identifier 148 of the corresponding subarea 138. For example, the identifier 148-2 of the second subarea 138-2 can be included in the request 412 to obtain the second data set 140-2 in a message 422.

In the example shown in Figure 3, a combination of the Universal Transverse Mercator (UTM) coordinate system and the military grid reference system (MGRS) is used to define the identifier 148 of the subareas 138. The UTM system defines 60 longitudinal zones, identified by a corresponding number. The MGRS defines 20 latitude bands identified by a corresponding letter. The combination of a zone and a latitude band is referred to as a grid zone designator (GZD), e.g. '31U'. Each grid zone is further divided into 100km grid squares, identified by two further letters referred to as Grid Square ID, e.g. 'CT'. A combination of a GZD and a Grid Square ID may be used to identify a corresponding 100x100 km square in the MGRS system, which may correspond to a subarea 138 of the disclosed system.

In the drawings and the following description, MGRS is used as it is human readable. However, it will be clear to the skilled person that other map projection and/or grid reference systems may be used. Similarly, while equi-sized, square subareas 138 are used in the presented examples, differently shaped and sized subareas, e.g. rectangles or triangles of different sizes, or irregularly shaped areas, such as the boundary of countries or regions, may be used to define different subareas 138.

In this example, the receiver-side device 100 sends a request 412 to obtain a data set 140-2 corresponding to a square subarea 138-2 surrounding the approximate position 134, for example, by requesting correction data for the 100km MGRS grid square '31UCT'. The content server 300 will then provide, in one or more messages 422, the requested correction data set 140-2 corresponding to the MGRS grid square '31UCT'.

The receiver-side device 100 may implicitly specify the required precision level of the returned data set 140 by providing a request 412 containing an identifier 148-2 of the same precision. For example, in response to providing only grid square 4QFJ with a precision level of 100 km for the approximate position 134, the content server 300 will provide one or more messages 422 with correction data for the corresponding MGRS grid square 4QFJ of 100x100 km. Correspondingly, a request 412 for position 4QFJ16 has a precision level of 10 km, and a request 412 for position 4QFJ1267 has a precision level of 1 km. The content server 300 will provide data sets 140 for correspondingly smaller subareas 138.

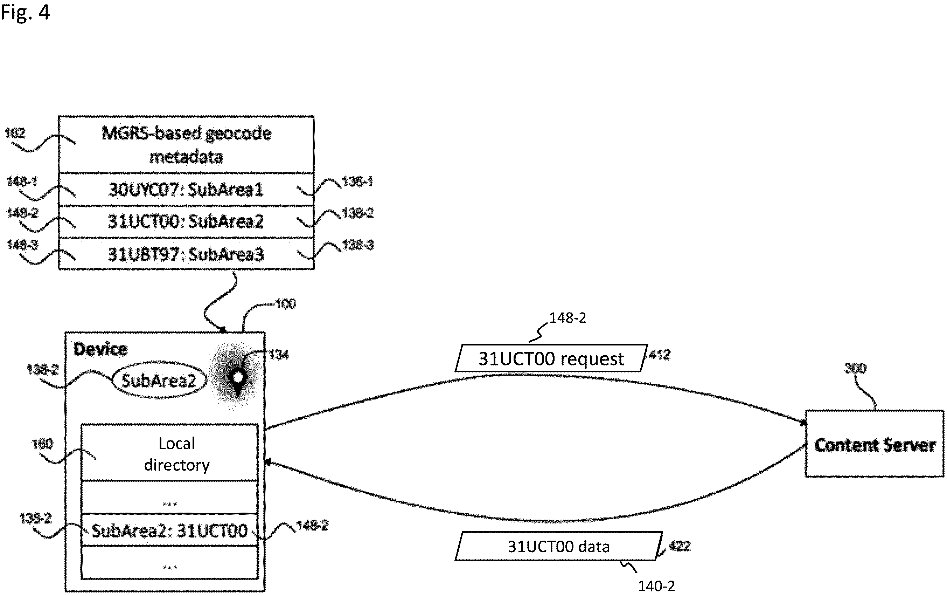

Figure 4 shows a further potential embodiment combining some of the features of the previously described embodiments of Figures 2 and 3. In the embodiment of Figure 4, MGRS-based geocode metadata 162 associated with each data set 140 may be used by the receiver-side device 100 to build a mapping relationship in the form of a local directory 160 of available data sets 140. This may include metadata stored in the received data sets 140 themselves, e.g. headers or categories, or metadata used during querying, e.g. an identifier 148 of the data set 140 or topic of a content delivery system. Typically, such metadata is publicly available before a receiver-side device 100 queries a data set 140 or subscribes to receive updates for a specific subarea 138.

The local directory 160 comprises directory entries mapping each possible identifier 148, for example the MGRS identifier 33UCT00, contained in a list of available topics or directly included in a previously received data set 140 to a corresponding subarea 138 covered by said identifier 148. In this way, the receiver-side device 100 can successfully infer the mapping relationship 136 for direct lookup of approximate positions 134. Again, no direct support by the content server 300 is required.

Each of the above implementations has its own advantages. In particular, the provision of an explicit directory 152 by the content server 300 in Figure 2 reduces the amount of computation to be performed by the receiver-side device 100. At the same time, it provides a high degree of flexibility for the content server 300, as it can redefine the subareas 138 and corresponding data sets 140 according to operational needs. On the other hand, the embodiment described with reference to Figure 3 has the advantage that no additional metadata needs to be exchanged between the content server 300 and the receiver-side device 100, reducing the required bandwidth and also storage requirements. It does, however, require the receiver-side device 100 to determine the correct subarea 138 based on calculations each time a data set 140 148 is requested. Finally, the embodiment described with respect to Figure 4 combines the ease of a directory-based lookup by the receiver-side device 100 with the reduced transmission bandwidth and processing requirement on the side of the content server 300. In this case, the receiver-side device 100 must provide some storage and processing resources to successively build the local directory 160.

In practice, these different embodiments may be combined in a single content distribution system and/or receiver-side device 100. Transferring and storage of an explicit directory 152 may be more computing efficient, whereas an implicit inferred mapping based may be more memory efficient. Thus, whether or not a directory 152 is explicitly requested from the content server 300 or internally generated may be determined based on the available bandwidth, the available storage capacity of the receiver-side device 100 and/or the availability of such a service on the side of the content server 300.

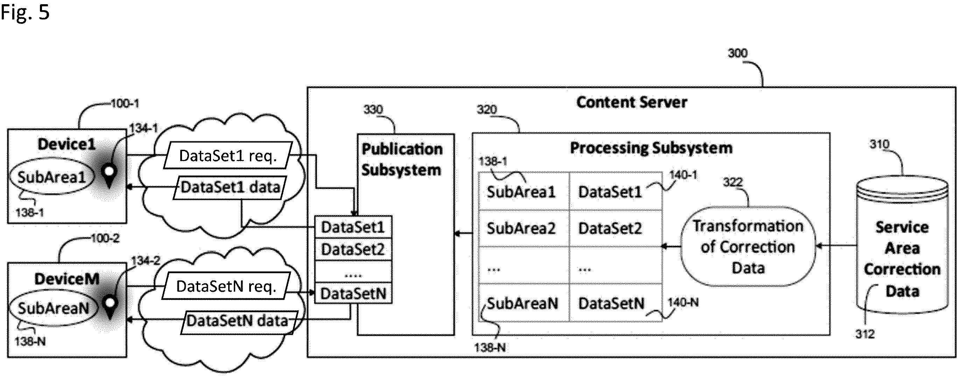

Figure 5 shows some further details of the content server 300 according to an embodiment of the present disclosure. In the depicted embodiment, the content server 300 comprises a database 310 for storage for service area correction data 312. Specifically, the database 310 may comprise individual entries for a large number of parameters suitable for enabling or improving processing of satellite signals by a plurality of receiver-side devices 100. For reasons of simplicity, only two receiver-side devices 100-1 and 100-2 are shown in Figure 5. The service area correction data 312 may comprise, for example, correction data applicable to each GNSS satellite 200 in service such as orbit, clock and bias corrections data, as well as ionospheric and tropospheric correction data modelling respective parts of the atmosphere for the entire planet or a selected part of it, which is served by the GNSS satellites 200. The service area correction data 312 may also comprise quality and integrity data. It may be obtained by processing the raw data collected while receiving and decoding the signals generated by the GNSS satellites 200 in service and by integrating and processing the information coming from other sources.

The content server 300 further comprises a processing subsystem 320 which comprises at least one processor 322 for transformation of the correction data 312 into individual data sets 140-1 to 140-N. The transformation by the processor 322 is based on predefined subareas 138-1 to 138-N of the service area corresponding to the respective data sets 140-1 to 140-N. For example, the processor 322 may select and process satellite-related correction data for those satellites that are currently visible in a given subarea 138. Correspondingly, the processor 322 may also select and process parameters modelling the atmosphere in a direct line of sight between receiver-side devices 100 placed in a given subarea 138 and the corresponding set of satellites 200. As a consequence, each one of the data sets 140-1 to 140-N is much smaller than the entire collection of service area correction data 312 provided in the database 310. Attention is drawn to the fact that several of the data sets 140 may comprise the same data, e.g. clock correction data for a satellite visible from several subareas 138. That is to say, the total size of all data sets 140-1 to 140-N is likely to exceed the size of the service area correction data 312. Stated differently, the processing subsystem may simply subdivide the available service area correction data 312 into equally sized subsets, or it may transform it to completely new data sets 140 specific for use in a given subarea 138.

The data sets 140-1 to 140-N generated by the processor 322 are made available via a publication subsystem 330 of the content server 300. As shown in Figure 5, each receiver-side device 100 may individually request an appropriate data set 140 corresponding to the subarea 138 surrounding its current, approximate position 134. For example, the first receiver-side device 100-1 may request the first data set 140-1 corresponding to a first subarea 138-1. In contrast, the second receiver-side device 100-2 may request the n-th data set 140-N corresponding to the n-th subarea 138-N.

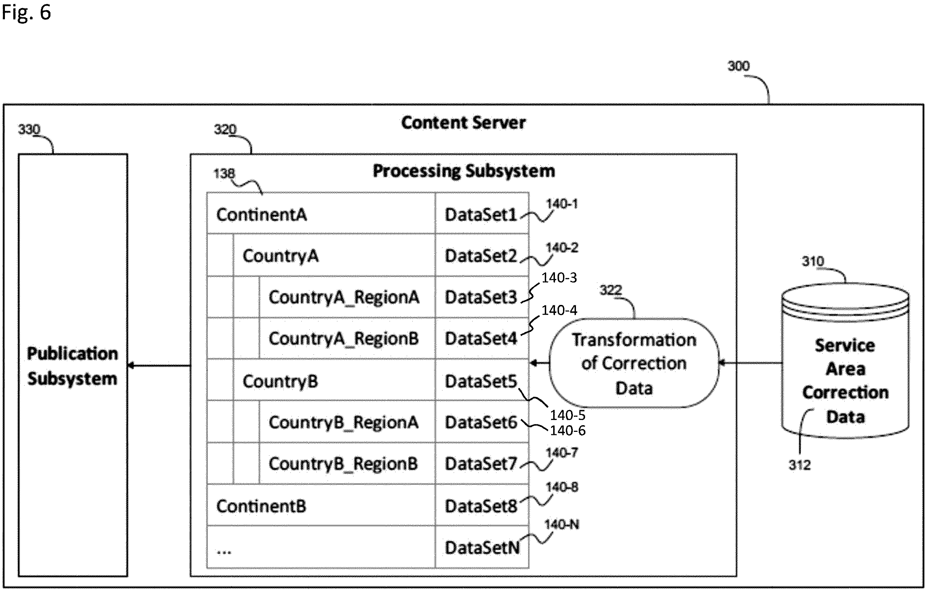

Figure 6 shows a possible way of organizing the individual data sets 140. In the example shown in Figure 6, the available service area correction data 312 is transformed into data sets 140 corresponding to different, hierarchically organized subareas 138. In particular, on the highest level of the hierarchy, the processor 322 has divided the available correction data 312 into different data sets 140 corresponding to different continents. In the described example, data set 140-1 corresponds to a first continent ("ContinentA") and the eighth data set 140-8 corresponds to a second continent ("ContinentB"). The first data set 140-1 is further subdivided into smaller data sets 140-2 to 140-7 by countries and regions as shown in Figure 6.

Depending on the capabilities and/or the needs of receiver-side device 100, the receiver-side device 100 may request only a relatively small data set, for example a fourth data set 140-4 corresponding to region B of country A in continent A, or may request a relatively large data set, for example data set 140-8 covering the entire continent B. Correction data sets 140 of the same level of a location hierarchy may also be referred to a series, e.g. the continental series of data sets 140-1 and 140-8, the country series of data sets 140-2 and 140-5, and the region series of data sets 140-3, 140-4, 140-6 and 140-7. In this way, the hierarchy shown in the embodiment of Figure 6 essentially gives the receiver-side device 100 the choice between the amount of detail it wants to disclose to the content server 300 regarding its approximate position 134 and the amount of data being retrieved in response. It also allows the receiver-side device 100 to store as much correction data as is technically feasible or desirable based on considerations such as its memory size, available bandwidths of a downlink channel 420, a pricing scheme for the obtained data sets 140 and so on.

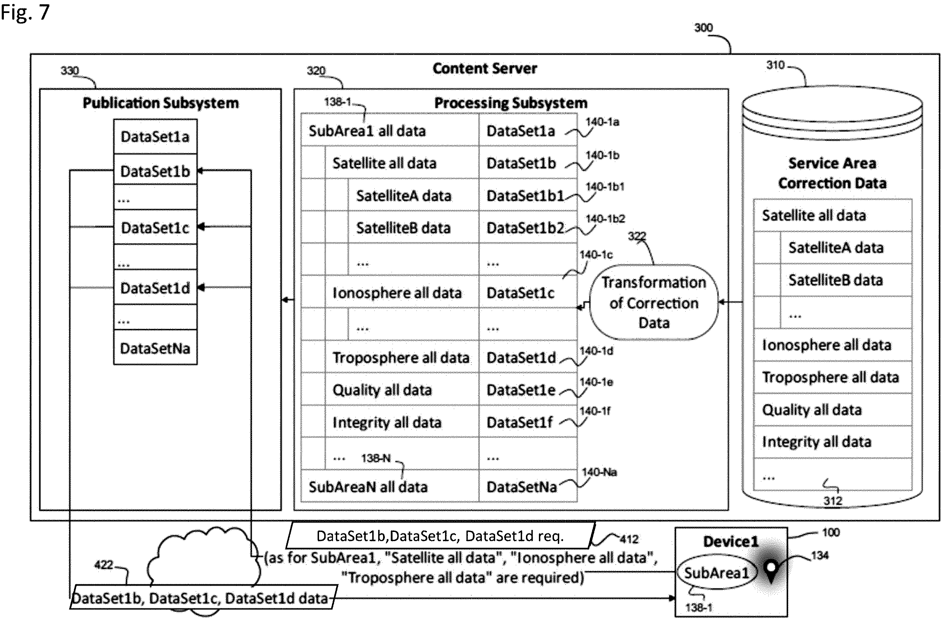

Figure 7 shows a different embodiment of the content server 300, wherein the processor 322 has organized the service area correction data 312 for each subarea 138 based on a type of the available correction data. For example, as shown in Figure 7, satellite-related correction data, ionospheric correction data, tropospheric correction data, quality data and integrity data for a first subarea 138-1 may be provided as different data sets 140-1b, 140-1c, 140-1d, 140-1e, and 140-1f, respectively. The quality data may indicate the accuracy of the provided correction data. The integrity data may indicate the confidence level and/or the error bounds and/or alerts pertaining to portions or all of the provided correction data.

Additional metadata (not shown in Figure 7) for enhanced receiver side processing may also be provided by the content server 300. Such additional metadata is not used to select a specific data set 140 and may not form a part of the localized corrections data. However, it may still be included in the geographically related content provided by the content server 300. The additional metadata may indicate the models and/or their parameters to make the most of the correction data provided.

As shown in Figure 7, further levels of the hierarchy may be used to further subdivide the data, e.g. into yet smaller data sets 140-1b1, 140-1b2, etc., for individual satellites. In this way, the device can choose, for a given subarea 138, to receive a combined data set 140-1a comprising all correction data available for the corresponding subarea 138-1 or only selected types of correction data.

For example, the receiver-side device 100 may choose to receive only correction data for a specific satellite, e.g. the data set 140-1b1 for correction data corresponding to satellite A. In this way, the receiver-side device 100 can tailor the received correction data specifically to its current requirements, for example based on the satellites visible to the receiver-side device 100. In the example query 412 shown in the lower part of Figure 7, only satellite correction data set 140-1b, ionospheric correction data set 140-1c and tropospheric correction data set 140-1d are requested and provided in one or more messages 422, whereas the quality data set 140-1e and the integrity data set 140-1f are not requested. Such a query may be based, for example, on the processing capabilities of the receiver-side device 100. In the hierarchy shown in Figure 7, different subareas 138 are arranged at the highest level, with the individual data types grouped below a common subarea 138, e.g. the first subarea 138-1. While this is not shown in the drawings, it is also envisioned to divide the correction data 312 by type on a higher level of a hierarchy and then divide all correction data of a particular type further by subareas 138.

Figure 7 further shows that it may be beneficial for a receiver-side device 100 to query a plurality of data sets 140 related to a single subarea 138 surrounding its approximate position 134. For easier reference, data sets 140 comprising data of different types but related to a common subarea 138 are referred to as companion data set (for instance the data sets 140-1b to 140-1f represent the companion data sets for the subarea 138-1). In general, not all data sets 140 forming a companion data set may cover the same subarea 138. For example, satellite correction data may be provided which covers an entire continent or a 1000x1000 km square, whereas corresponding tropospheric correction data may only cover a single country or a 100x100 km square.

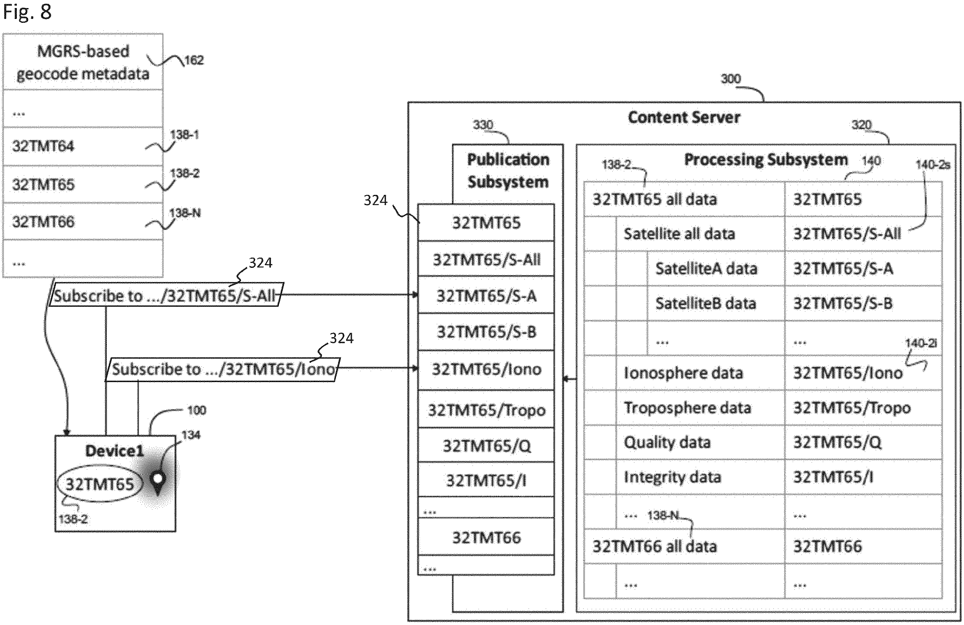

Figure 8 shows a further embodiment of the content server 300, which is somewhat similar to the embodiment described above with respect to Figure 7. Again, the available service area correction data 312 is organized in a hierarchical fashion for a number of subareas 138 of a service area. In the example shown in Figure 8, the subareas 138 correspond to MGRS-based grid squares of size 10x10 km as explained above with respect to Figures 3 and 4. Below the respective MGRS-based grid square, individual data sets 140 for different types of correction data is provided, as explained above with respect to Figure 7. Each of the available data sets 140 is identified by a unique topic like 32TMT65 or 32TMT65/S-All or 32TMT65/S-A or 32TMT65/S-B or 32TMT65/Iono and so on, whose name or metadata may indicate the subarea 138 to which the correction data relates to. For example, a data set 140-2s with correction data for all satellite-related correction information relevant for MGRS grid square 32TMT65 can be identified as '32TMT65/S-All'.

The individual topics 324 are made available for subscription by the publication subsystem 330. Accordingly, the receiver-side device 100 may receive data sets 140 of different topics 324 via different data streams. As shown in the example, the device 100 may subscribe to more than one topic 324. In particular, it subscribes to all satellite correction data set 140-2s as well as ionospheric correction data set 140-2i for the second subarea 138-2 corresponding to MGRS grid square identifier 32TMT65.

Attention is drawn to the fact that due to the subscription mechanism of the content server 300, updates to the respective data sets 140 may occur with different frequencies. For example, ionospheric correction data may be published with a first update interval, such as every 30 seconds, whereas the satellite clock correction data may be published with a second update interval, such as every 5 seconds.

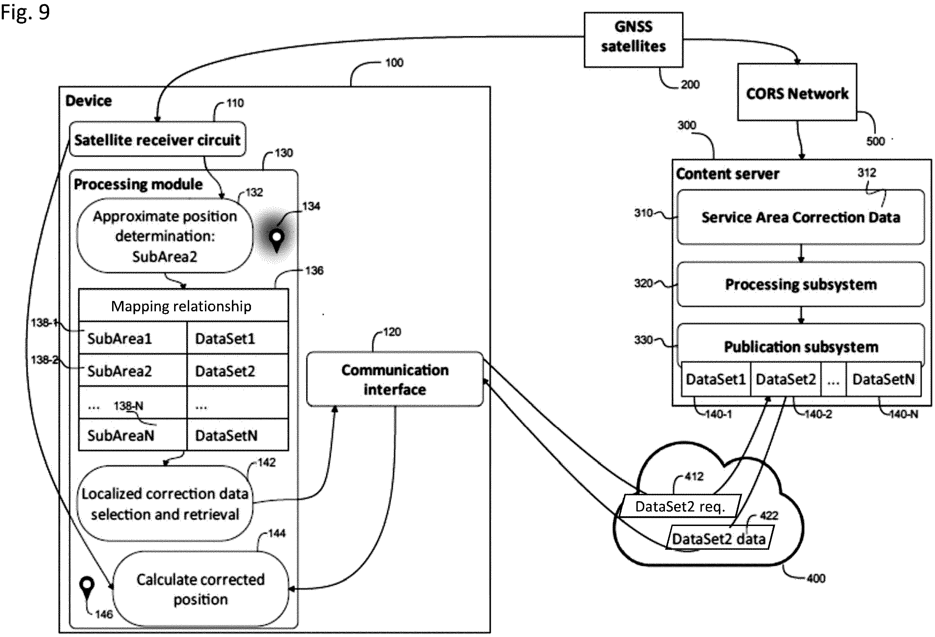

Figure 9 shows an overall view of a system comprising a receiver-side device 100, GNSS satellites 200, a content server 300, a data network 400 and a reference station network 500. In the example presented, the reference station network 500 essentially corresponds to the CORS network as explained above. The reference receivers of the reference station network 500 may be located so that they essentially cover the entire service area. Preferably, sufficient reference receivers are provided to generate correction data for each of the predefined subareas 138.

Figure 9 essentially shows how the service area correction data 312 can be obtained and processed by the correction server 300. For this purpose, individual reference receivers located at known positions receive satellite signals from the GNSS satellites 200. They then provide corresponding data relevant to generate correction data for their area to the content server 300, which collects it in a database 310 or similar structure as service area correction data 312 covering significant parts or all of the service area of the GNSS. The service area correction data 312 is then transformed by the processing subsystem 320 as described above to generate individual data sets 140-1 to 140-N.

Attention is drawn to the fact that the correction data provided by multiple sources is aggregated by the content server and then transformed into geographically related content specific for a given subarea. That is to say, there is no one-to-one mapping between a single reference receiver and one of the generated data sets 140-1 to 140-N.

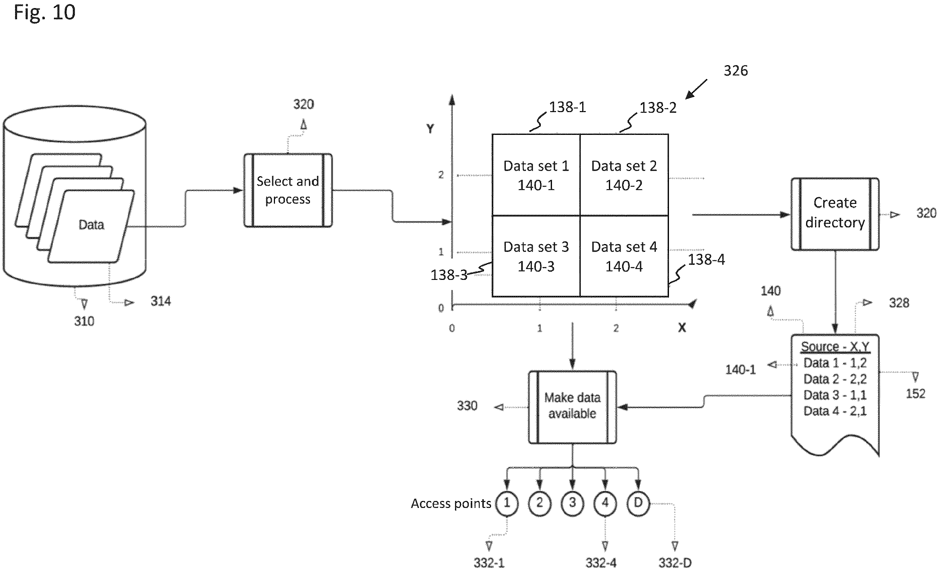

Figure 10 shows the data reorganization performed by the processing subsystem 320 in more detail. It shows that the database 310 comprises a large number of individual correction data entries 314, which together form the service area correction data 312. The processing system 320 reorganizes the geographically related content to a manifold of locally tailored data sources corresponding to individual data sets 140 that satellite receiver devices 100 can select from.

In the depicted embodiment, the corresponding subareas 138-1 to 138-4 represent a true partitioning, i.e. a nonoverlapping subdivision of the entire service area 326. However, in other embodiments, the pre-defined subareas 138 and corresponding data set 140 may be partly or entirely overlapping. A partial overlapping of subareas 138 is useful to avoid a frequent switching between data sets 140, for example when a receiver-side device 100 is located close to a boundary between two neighboring subareas 138-1 and 138-2. A complete overlapping may arise when data sets 140 corresponding to different levels of a hierarchical structure are generated, i.e. a first series of data sets 140 covering entire countries and a second series of data sets 140 covering individual province of a country. In this case, a first subarea 138-1 of the first series of data sets 140 covers the area of a first country, such as Austria, and will be overlapping with an entire second subarea 138-2 of the second series of data sets 140 covering a province of said country, such as Tyrol.

Figure 10 further shows the generation of an explicit directory 152 by the processing subsystem 320. It provides a mapping between the individual data sets 140 generated and corresponding co-ordinates 328 of the subareas 138 covered by each data set 140. In the example, center coordinates 328 of each data set 140 are indicated, assuming a fixed shape and size of the individual sub areas 138. However, especially in case the subareas 138 are non-uniform, e.g. have different sizes, aspect ratios or shapes, the coordinates may take a more complex form, e.g. a base reference and longitudinal and latitudinal extend, or a polygon describing the covered subarea 138.

The individual data sets 140 and the directory 152 are then made available by the publication subsystem 330 at different access points 332-1 to 332-4 and 332-D, e.g. through different URLs served by an http server or as different topics of a content management system.

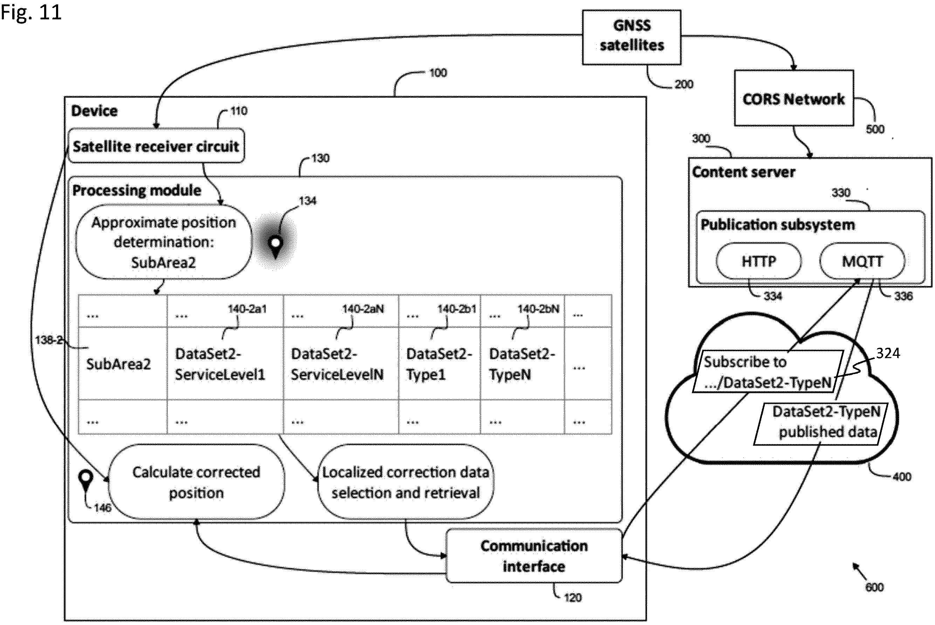

Figure 11 shows a content distribution system 600 including the content server 300 and the receiver-side device 100. In the embodiment shown in Figure 11, a receiver-side device 100 may individually request data sets 140, through the communication interface 120, directly from the content server 300 through an HTTP interface 334. Alternatively, the receiver-side device 100 may subscribe to a topic 324 of the content server 300 through an MQTT 336 interface to regularly receive the corresponding data set 140. Both HTTP and MQTT are connection oriented and use the underlying TCP/IP transport protocol. Although not shown, other application level protocols, like the Networked Transport of RTCM via Internet Protocol, NTRIP, may also be used. For example, one NTRIP mountpoint could be used to provide a directory 152 or similar mapping data, and several other mountpoints could be used to provide different data sets 140 to support corresponding subareas 138. Similarly, other transport level protocols, such as UDP/IP may also be used, e.g. to provide different data sets at different UDP ports.

In the depicted example, different data sets 140-2a1 to 140-2bN are available for the same subarea 138-2. The receiver-side device 100 may decide which data set 140-2a1 to 140-2bN it is going to receive by subscribing to a corresponding topic 324, e.g. based on its technical capabilities or a pricing scheme for the different service levels. In the example, the receiver-side device 100 subscribes to a specific topic 324 related to a given subarea 138-2 and service level of a correction data set 140-2bN through the MQTT interface 336, using a MQTT Subscribe message. In response, the publication subsystem 330 provides updates to the receiver-side device 100 using a MQTT Publish message each time a new data set 140-2bN with localized correction data becomes available and/or with an agreed update frequency based, for example, on the service level or subscription request of the receiver-side device 100.

Alternatively, the publication subsystem 330 may decide which of the data set 140-2a1 to 140-2bN is appropriate for the receiver-side device 100, e.g. based on subscription data of an associated customer. In this case, the receiver-side device 100 may subscribe to a generic topic 324 related to the subarea 138-2. The publication subsystem 330 then resolves, based on further information, such as a stored, customer or device-specific service level, which one and/or how often the service-level specific data set 140-2a1 to 140-2bN is delivered to the receiver-side device 100. For example, for a first, relatively low service level or device capability, a new data set 140 may be delivered once every minute or once every thirty seconds. For a second, relatively high service level or device capability, a new data set 140 may be delivered once every 5 seconds or once every second.

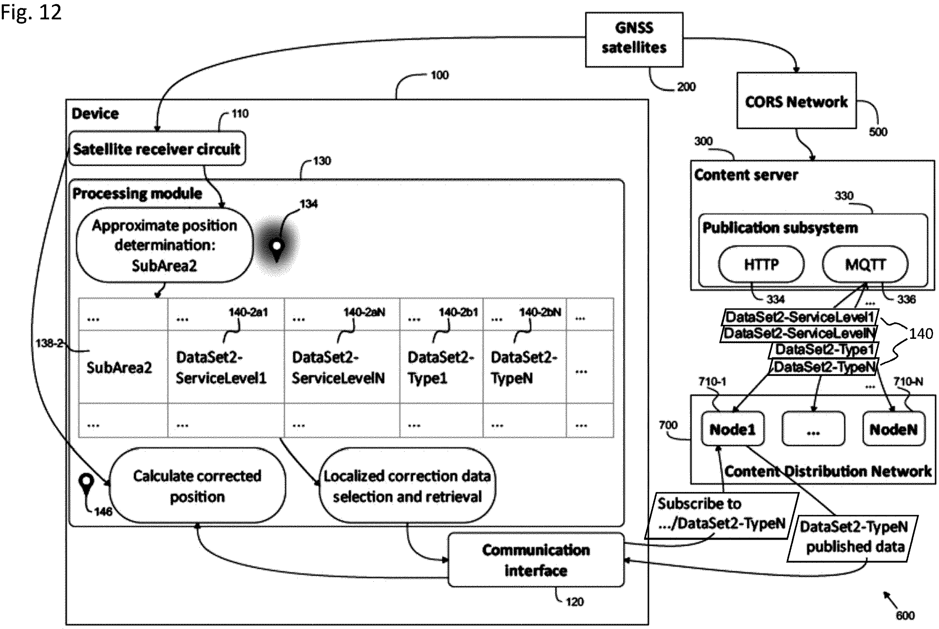

In the embodiment described above with regards to Figure 11, the receiver-side device 100 communicates directly with the content server 300. However, especially for a content distribution system 600 with a large number of receiver-side devices 100, a content distribution network (CDN) 700 may be used to facilitate the distribution of the geographically related content provided by the content server 300 and to reduce the latency of the delivery. This is shown in Figure 12.

In the presented example, the content distribution network 700 comprises a plurality of CDN nodes 710-1 to 710-N. Each CDN node 710 may be located at a different physical location or logical part of the communication network 400 (not shown in Figure 12). As a first example, CDN nodes 710-1 to 710-N may be arranged in different radio access networks forming part of the overall communication network 400. As another example, different content nodes 710 may be provided in different core networks of different cellular phone service providers. In yet another example, if the communication network 400 is the Internet, different Internet Service Providers (ISP) may provide CDN nodes 710 within their respective core networks or at different locations, e.g. subnets.

Accordingly, the communication interface 120 of different receiver-side devices 100 may contact a CDN node 710, which is physically or topologically arranged relatively close to the receiver-side device 100. This helps to improve performance, e.g. reduce latency and/or increase bandwidth, in the data exchange between the receiver-side device 100 and the respective CDN node 710. At the same time, the CDN nodes 710 can act as a cache for the content server 300 to avoid potential performance bottlenecks.

Moreover, this adds an additional layer of data security and anonymity between the receiver-side device 100 and the content server 300. As depicted in Figure 12, the content server 300 provides available data sets 140 to each one of the CDN nodes 710. However, the content server 300 may not be aware of which receiver-side device 100 or how may receiver-side devices 100 request a specific data set 140 from any one of the CDN nodes 710. Assuming, that the content distribution network 700 and the content server 300 are operated and controlled by different entities, data concerning the requested subareas 138 surrounding the approximate positions 134 of the receiver-side devices 100 may therefore never be shared with the content server 300 at all.

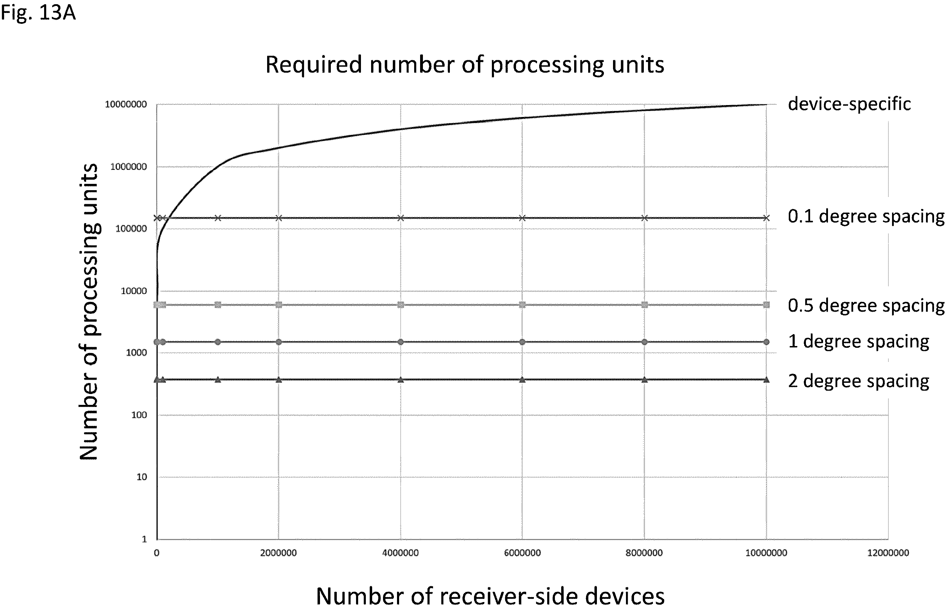

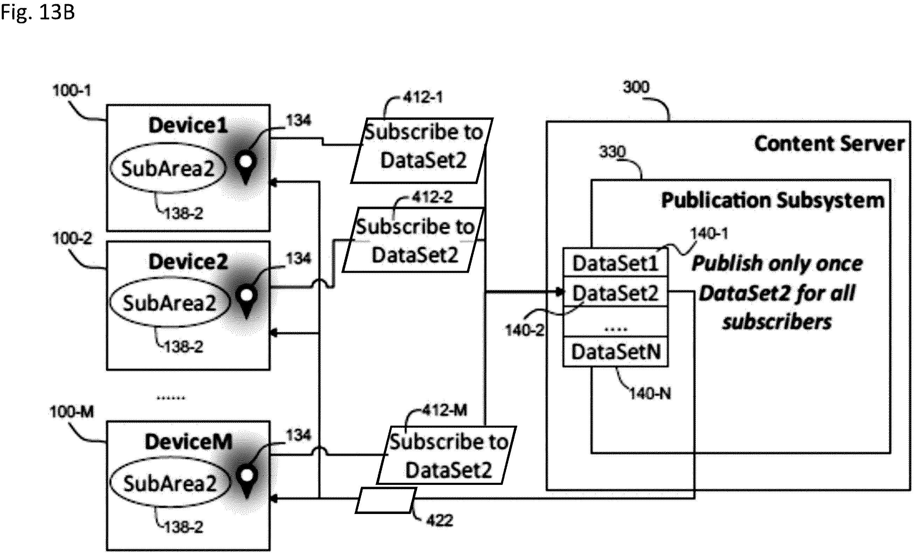

Figures 13A and 13B further highlights the improved scaling behavior of the disclosed content distribution system. As can be derived from Figure 13A, the number of processing units required for the content server 300 depends only on the number and size of the subareas 138, but not on the number of receiver-side devices 100. Put differently, regardless of whether one thousand or one million receiver-side devices 100 are present in a given subarea 138-2, the corresponding data set 140-2 only needs to be generated and published by the content server 300 once for a given update interval as shown in Figure 13B. Accordingly, the disclosed content distribution system 600 can be described as resource efficient on the content server 300, as it is not required to create a separate message 422 or a content stream per receiver-side device 100 as indicated by the unbroken top line of Figure 13A labelled "Device-specific". Instead, it is sufficient to create multiple fine granular data sets 140 or streams of data for selection by the receiver-side devices 100, e.g. by subscription.

The precomputed data set 140-2 may then be distributed, for example within a local cell of the communication network 400, to all interested receiver side-devices 100-1, 100-2 and 100-3 together, which greatly improves scalability of the data delivery.

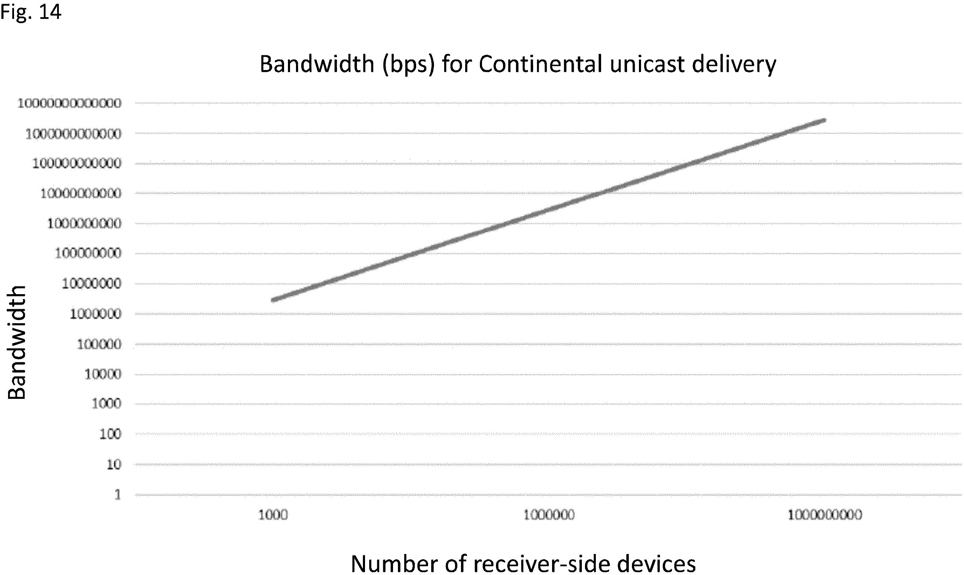

Figure 14 shows the required transmission bandwidth for delivering correction data for an entire continent by unicast to a large number of receiver-side devices. The transmission bandwidth growth linearly with the number of users or receiver-side devices 100. Moreover, due to the size of the continental data set, it is quite large in absolute terms and lies in the order of several Mbit/s for only a thousand users.

In comparison, the required bandwidth for transmitting a smaller data set with localized correction data covering only a relatively small subarea 138 of a service area by multicast or even unicast is much lower. For example, when using the content distribution network 700 shown in Figure 12, the output bandwidth requirement of the content server 300 is much lower, as each relatively small dataset 140 needs to be provided only to a limited number of CDN nodes 710. Moreover, from the perspective of the receiver-side device 100, only a single relatively small data set 140 needs to be received. Accordingly, the disclosed distribution method can be described as transmission bandwidth efficient on the communication network 400, in that it enables the minimization of the correction data sent in all typical data transmission scenarios, i.e. broadcast, multicast or even unicast, without the need for the receiver-side device 100 to disclose its approximate position 134.

In contrast, if each receiver-side device 100 was to provide its approximate position 134 directly to a content server 300, the content server 300 would need to provide and transmit, in response, a data set 140 tailored to the individual receiver-side device 100 using a unicast-like approach. This would disclose the approximate position 134 of the receiver-side device 100 to the content server 300. Moreover, the subsequent generation and delivery of the data set 140 tailored to it would represent a performance issue when thousands or millions of different receiver-side devices 100 were to be served by a content provider 300, and would prevent the use of advanced distribution methods in a communication network 400, such as multicasting and/or content delivery networks.

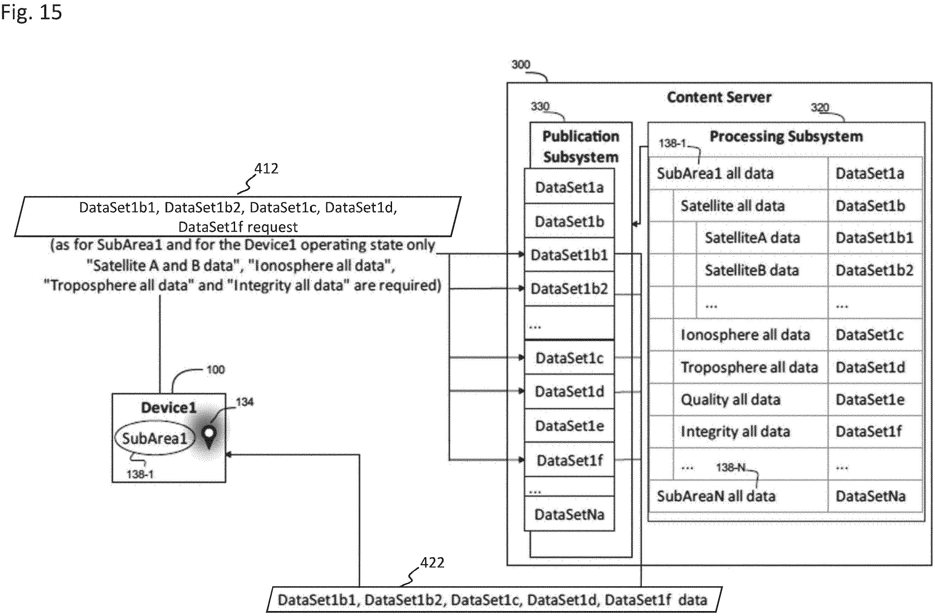

The described architecture also adds further flexibility, as the receiver-side device 100 can choose, based on its current position, operational state, computational and storage requirements, quality requirements as well as user preferences, one or more data sets 140 made available by the publication subsystem 330. This is shown in Figure 15, where the receiver-side device 100 requests only data about "satellite A", "satellite B" and all ionosphere and troposphere and integrity data for "subarea1". This allows the minimization of the bandwidth required to obtain only the information that is relevant to receiver-side device 100. Moreover, it allows to tailor the provided geographically related content to cover different situations and business models.

As an example, the receiver-side device 100 may initially request all available correction data corresponding to its approximate position 134 during bootstrapping to facilitate fast determination of a more accurate position 146 and/or a fast convergence time for positioning. However, once the receiver-side device 100 has obtained an accurate position 146, it may, based on a continuous monitoring of the received satellite signals, determine and maintain corresponding correction data internally, i.e. without provision of further updates of correction data from the content server 300. Thus, after an initial start-up phase, the receiver-side device 100 may unsubscribe from certain data sets 140 in order to reduce the transmission bandwidths and/or associated cost for data transfer. In this way, the described system and methods essentially enable a pay-as-you-go approach to geographically related content, including correction data for a satellite-based navigation system.

As another example, the receiver-side device 100 may choose satellite correction data as aggregated data per satellite or per subarea 140 or per set of satellites depending on its own position and expected quality of the positioning. For example, if only a relatively small subsets of GNSS satellites 200 are used by the receiver-side device 100, it may not be necessary to retrieve satellite correction data for all GNSS satellites 200 visible from within the present subarea.

In this way, a given receiver-side device 100 only receives data likely to be useful for it, rather than a complete set of service area correction data 312, or correction data for a very large area, such as an entire continent. Accordingly, the disclosed content distribution method and system 600 can be described as content efficient, as it is the receiver-side device 100 rather than the content server 300 who decides on the content to be transmitted, such that the transmission of unnecessary content is avoided.

While the invention has been described using various embodiments shown in the attached set of figures, the skilled person will understand that the various aspects can be combined in many ways without departing from the scope of the disclosure as set out in the attached set of claims.

## Claims

1. A receiver-side device for use in a satellite-based navigation system, the receiver-side device comprising:
- a satellite receiver circuit for receiving signals from at least one satellite of the satellite-based navigation system;
- a communication interface for requesting and receiving data from a communication network; and
- at least one processing module configured to:
- determine an approximate position of the receiver-side device;
- select at least one data set from a plurality of available data sets based on the determined approximate position, each data set corresponding to a predefined subarea of a service area served by the satellite-based navigation system and comprising geographically related content relevant to the respective subarea, wherein the content comprises localized correction data of the satellite-based navigation system;
- request the selected at least one data set and receive corresponding content relevant to the approximate position from the communication network; and
- process signals from the satellite-based navigation system received by the satellite receiver circuit, comprising calculating a corrected position and/or a corrected time using the received localized correction data relevant to the approximate position.

2. The receiver-side device of claim 1, wherein the at least one processing module is specifically configured to:
- determine the approximate position of the receiver-side device based on signals received by the satellite receiver circuit.

3. The receiver-side device of claim 1 or 2, wherein the at least one processing module is configured to:
- determine that the approximate position is contained in a first subarea of the plurality of subareas; and
- select a first data set corresponding to the first subarea of the service area based on a mapping relationship between the plurality of available data sets and the corresponding subareas.

4. The receiver-side device of claim 3, wherein the at least one processing module is configured to
- receive a directory from the communication network, the directory defining the mapping relationship; and/or
- infer the mapping relationship based on metadata associated with the plurality of data sets; and/or
- compute the mapping relationship based on a map projection system for the service area, defining an ordered set of subareas of the service area.

5. The receiver-side device of any one of claims 1 to 4, wherein a subset of more than one data set from the plurality of available data sets corresponds to the approximate position, and the at least one processing module is configured to select at least one data set from the subset of more than one data set based on at least one of the following parameters: a service level agreement; a desired precision of the localization; a current operating state of the receiver-side device; a memory size of the receiver-side device; a size of the more than one corresponding data set; a current data transmission rate of the communication interface; a tariff for usage of the communication interface; a pricing structure for the geographically related content; and an update frequency of the more than one corresponding data sets.

6. The receiver-side device of any one of claims 1 to 5, wherein the at least one processing module is configured to send a subscription request, identifying at least one of a data stream or a topic, to a content server or a node of a content distribution network and, in response to the subscription request, receive current versions of the at least one selected data set via the at least one of the subscribed data stream and/or topic from the content server or the node of a content distribution network, respectively.

7. A content server for a satellite-based navigation system, comprising:
- a database for collecting correction data for a service area served by the satellite-based navigation system for use by a plurality of receiver-side devices of the satellite-based navigation system;
- a processing subsystem for transforming the correction data into a plurality of separate data sets, each data set corresponding to a predefined subarea of the service area and comprising geographically related content relevant to the respective subarea, wherein the content relevant to the respective subarea comprises localized correction data of the satellite-based navigation system; and
- a publication subsystem for distributing the plurality of separate data sets over a communication network such that different receiver-side devices of the satellite-based navigation system can select and request at least one data set from the plurality of separate data sets and receive the corresponding localized correction data for correcting signals received from the satellite-based navigation system within a corresponding subarea.

8. The content server of claim 7, wherein the processing subsystem is configured for transforming the geographically related content into two or more different series of separate data sets based on different subdivisions of the service area, the different subdivisions comprising at least two of a subdivision by continents, a subdivision by countries, a subdivision by provinces and a subdivision by regions.

9. The content server of claim 7 or 8, wherein
- the database is configured to collect different types of correction data, comprising at least one of satellite-related correction data, ionosphere-related correction data, troposphere-related correction data, quality data or integrity data; and
- the processing subsystem is configured to transform the different types of correction data into a plurality of companion data sets, each companion data set comprising localized correction data of at least one type of correction data applicable to the predefined subarea of the service area; and
- the publication subsystem is configured to distribute at least two of the companion data sets as separate data sets over the communication network.

10. The content server of one of claims 7 to 9, wherein
- each one of the plurality of data sets is associated with corresponding metadata, the metadata indicating a mapping relationship between the respective data set and a corresponding subarea; and/or
- the publication subsystem further publishes a directory defining a mapping relationship between each one of the plurality of data sets and the corresponding subareas, such that receiver-side devices of the satellite-based navigation system can determine a locally applicable data set from the plurality of separate data sets without disclosing their current position to the content server; and/or
- the publication subsystem provides at least one of a separate data stream or topic for each one of the plurality of subareas, such that receiver-side devices of the satellite-based navigation system can subscribe to a locally applicable data set from the plurality of separate data sets without disclosing their current position to the content server.

11. A content distribution system comprising at least one receiver-side device according to any one of claims 1 to 6 and the content server according to any one of claims 7 to 10.

12. The content distribution system of claim 11, further comprising one or more nodes of a content distribution network, wherein
- the content server is configured to provide the plurality of data set to the one or more nodes; and
- the at least one receiver-side device is configured to request and receive the at least one data set from at least one of the one or more nodes.

13. A signal processing method, comprising the following steps performed by a receiver-side device of a satellite-based navigation system:
- determining an approximate position;
- selecting at least one data set from a plurality of available data sets based on the determined approximate position, each data set corresponding to a predefined subarea of a service area served by the satellite-based navigation system and comprising geographically related content relevant to the respective subarea, wherein the content comprises localized correction data of the satellite-based navigation system;
- requesting the selected at least one data set and receiving corresponding content relevant to the approximate position from the communication network; and
- processing signals from the satellite-based navigation system received by a satellite receiver circuit, comprising at least one of calculating a corrected position and/or calculating a corrected time using the received localized correction data relevant to the approximate position.

14. The method of claim 13, further comprising the following steps performed by a content server:
- collecting correction data for the service area served by the satellite-based navigation system for use by a plurality of receiver-side devices of the satellite-based navigation system;
- transforming the correction data into the plurality of separate data sets; and
- distributing the plurality of separate data sets over the communication network.

15. A computer program product comprising instructions that, when executed by at least one processor of a receiver-side device or a content server, cause the receiver-side device or the content server to perform the steps of claim 13 or 14, respectively.
